# EUROPEAN PATENT SPECIFICATION

(11) **EP 1 238 243 B1**
(45) Date of publication and mention of the grant of the patent: **04.05.2005**
(21) Application number: 00983250.2
(22) Date of filing: 07.12.2000
(51) Int. Cl.: G01B 5/00

(54) **APPARATUS FOR CHECKING FEATURES OF MECHANICAL PIECES WITH ROTATIONAL SYMMETRY**
APPARAT ZUM PRÜFEN DER MERKMALEN VON MECHANISCHEN STÜCKEN MIT ROTATIONSSYMMETRIE
APPAREIL POUR VERIFIER DES CARACTERISTIQUES DE PIECES MECANIQUES A SYMETRIE DE REVOLUTION

(30) Priority: 13.12.1999 IT BO990675
(43) Date of publication of application: 11.09.2002
(73) Proprietor: MARPOSS SOCIETA' PER AZIONI, 40010 Bentivoglio BO (IT)
(72) Inventor: LAZZARI, Valerio, I-40129 Bologna (IT)
(86) International application number: PCT/EP2000/012361
(87) International publication number: WO 2001/044749

(56) References cited:
- WO-A-96/03256
- WO-A-97/41988
- US-A- 3 656 343

## Description

### Technical Field

The present invention relates to an apparatus for checking features, such as dimensional, geometrical and/or surface features, of mechanical pieces with rotational symmetry, that define an axis of symmetry, including a support structure, support and reference means for a piece to be checked, that define a reference axis and reference surfaces for positioning the piece to be checked in such a way that the axis of symmetry and the reference axis substantially coincide, a driving system, including a central body, coupled to the support structure and adapted for performing rotational displacements about an axis of rotation, driving means coupled to the support structure and adapted for causing said rotational displacements, at least a mechanical driving element, coupled to the central body and eccentric with respect to the axis of rotation, for cooperating with a surface area of the piece, eccentric with respect to the axis of symmetry, for transmitting rotational displacements to the piece, the driving system being arranged so that the reference axis and the axis of rotation substantially coincide, and checking means for cooperating with the piece to be checked.

### Background Art

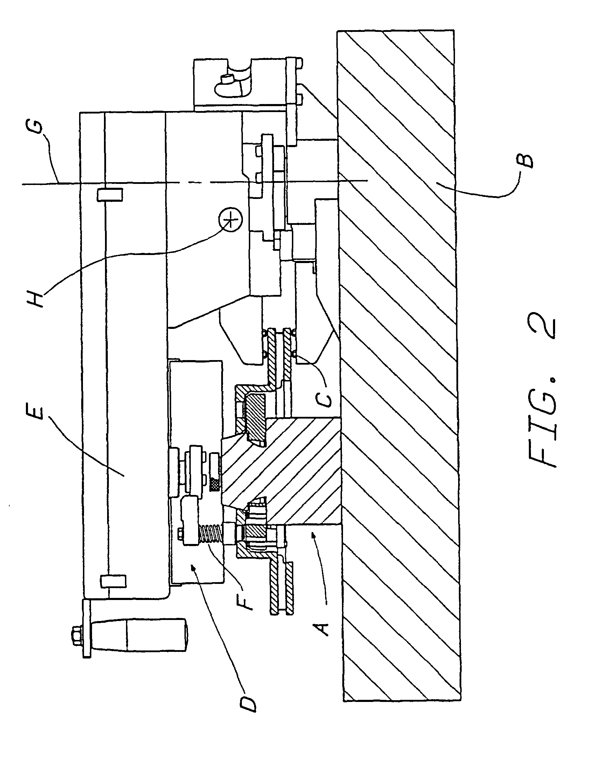

There are known apparatuses for the geometrical and/or dimensional checking of mechanical pieces with rotational symmetry as, for example, brake disks, flanges, drums, etc.. The checkings of one of these pieces can be carried out while the latter rotates about its axis of symmetry. For this purpose, the known apparatuses, as the one shown in figure 2, typically include a base B, means A for supporting and positioning the piece to be checked, coupled to the base B, gauging heads C for checking the piece and a driving system D for causing a rotational displacement of the piece in the course of the checking. The driving system D includes a support arm E, coupled to the base by means of fulcrum devices, that enable it to rotate about both an axis (G) parallel to the axis of symmetry of the piece and an axis (H) perpendicular to it. The support arm E carries a driving device F and an associated motor, not shown in the drawing, with a rotating limb equipped at an end with a hooking element for setting the piece into rotation. The support arm is displaced - in a manual or automatic way, for example by means of a pneumatic system - to the position in which the driving device cooperates with the piece. In such a position the limb rotates about an axis coincident with that of the piece, and the hooking element - inserted in an eccentric hole of the piece - sets the latter into rotation.

These apparatuses are expensive and bulky owing to the support arm and its associated coupling to the base. In fact, the cost for these arms and the associated means for enabling their displacements is very high, often comparable to or even higher than that of the other component parts of the apparatus. Furthermore, in order to prevent the operator from getting injured by accidentally contacting the support arm while moving or the piece while rotating, it is necessary to equip the apparatus with guards, thus determining an additional increase in costs and dimensions of the apparatus. Other devices are known from e.g. US-3 656 343, WO97/41988 or WO 96/03256.

### Disclosure of the Invention

Object of the present invention is to achieve an apparatus for the dimensional and/or geometrical checking of pieces with rotational symmetry that guarantees high standards of precision and reliability, is particularly compact and inexpensive and can be rapidly set for the checking of pieces that have different nominal dimensions.

This and other objects are achieved by an apparatus for the dimensional and/or geometrical checking of mechanical pieces with rotational symmetry according to claim 1.

### Brief Description of the Drawings

An apparatus according to the invention can be manufactured in conformity with the preferred embodiment hereinafter described with reference to the enclosed sheets of drawings, given by way of non limiting example only, wherein:
Figure 1 is a longitudinal cross-sectional view, with some parts shown in front view, of an apparatus for the dimensional and/or geometrical checking of mechanical pieces with rotational symmetry according to the invention; and
Figure 2 is a lateral view, with some parts shown cross-sectioned, of a known apparatus.

### Best Mode for Carrying Out the Invention

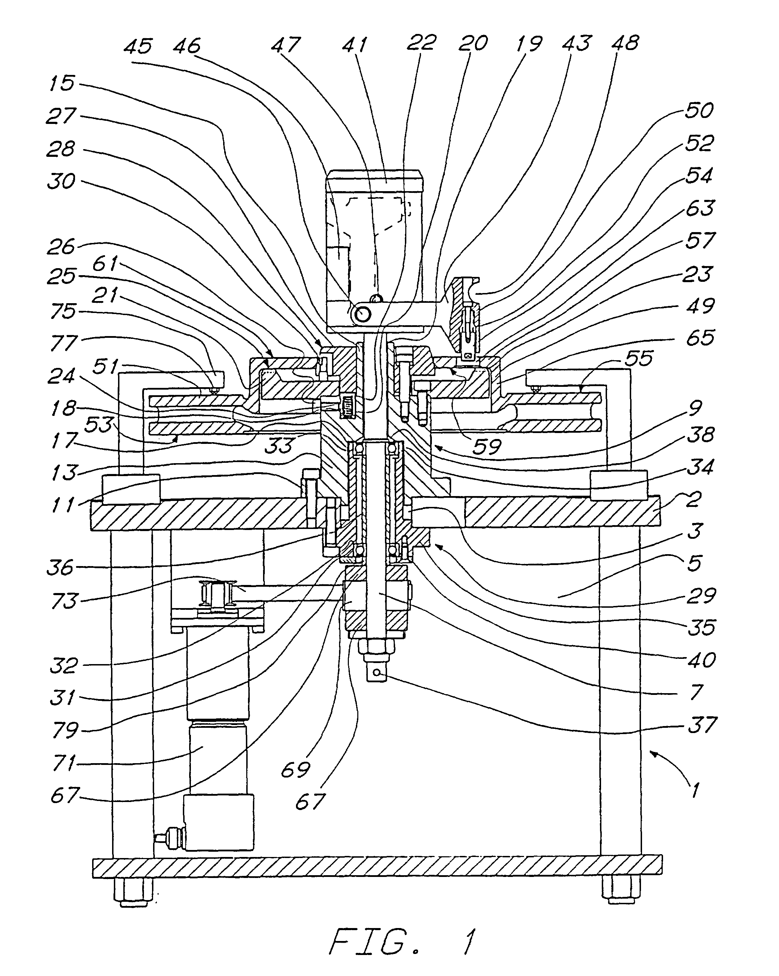

The checking apparatus shown in figure 1 includes a support structure **1** that defines a housing **5** limited at the top by means of a base plate **2** with a hole **3**.

Support and reference means for a piece to be checked **49** - for example a brake disk - that defines an axis of symmetry, comprise a support element **9** with rotational symmetry including three substantially cylindrical portions **11**, **13** and **15** with different external diameter dimensions: a first portion or flange **11** with larger diameter, a second portion **13** with intermediate diameter and a third portion **15**, with smaller diameter with respect to the other two. The support element **9** - coupled to base plate **2** at hole **3** by means of screws, only one shown in the figure - has an axial through hole that defines two internal cylindrical recesses **17** and **19**, that are coaxial, communicate with one another and are aligned with hole **3**. Furthermore, the support element **9** includes three seats **18,** with a substantially cylindrical shape and angularly spaced at 120° with respect to one another, only one shown in the figure. In each of these seats **18** there is housed a compression spring **20**, arranged at the interior of a loose tubular element **22** sealed at one end in such a way that spring **20** applies a force between the bottom of seat **18** and the sealed end of tubular element **22**. A slot **24**, on the tubular element **22**, houses the stem of a screw **26** screwed into a threaded hole of the support element **9**.

Furthermore, the means for supporting and positioning the mechanical piece **49** include a plate **21** and a centering nosepiece **27**. Plate **21** includes a central hole and a substantially annular relief rim **23** with an annulus-shaped plane surface **25** that has a coating of hard and wear-resistant material, for example "Widia". Surface **25** defines a reference surface for the piece **49** to be checked. Plate **21** is screwed to the second portion **13** of the support element **9** by means of four screws, only one shown in the figure.

The centering nosepiece **27** is coupled to the second portion **13** of the support element **9** by means of a shoulder screw, housed in a through hole of nosepiece **27**, that enables nosepiece **27** to perform limited axial translation displacements. Nosepiece **27** has a substantially frusto-conical surface **28** for centering and positioning the piece **49** and rests on the three tubular elements **22** that, thanks to slot **24** and the stem of screw **26**, enable - when urged by the action of springs **20** - nosepiece **27** to axially displace of an amplitude defined by the axial dimensions of the slot **24.**

The means **9, 21** and **27** for supporting and positioning piece **49** define a reference axis. In practice, when the piece **49** is in the checking position, i.e. it is resting and centered on the reference surfaces of plate **21** and nosepiece **27**, the axis of symmetry of piece **49** and the aforementioned reference axis coincide.

A driving system includes a shaft **7**, partially housed in the axial hole of the support element **9** and a bush **29** with a flange **35** coupled - by means of screws, only one shown in figure 1 - to the base plate **2** at hole **3** and at the side of base plate **2** opposite to the one carrying the support element **9**. Bush **29** includes a through hole and two seats **32** and **34** for the housing of two bearings **31** and **33**. A spacer **36** is placed between the two bearings **31** and **33**. Shaft **7** is housed in the through hole of bush **29** and guided by bearings **31** and **33** to rotate about its longitudinal axis, that defines an axis of rotation for the driving system, substantially coincident with the reference axis of the apparatus. Shaft **7** defines an annular projecting part **38** that is abutted against bearing **33**. The other bearing **31** is locked by means of a flange **40** coupled to bush **29** by means of screws, only one shown in figure 1.

Shaft **7** defines, at one of its two ends, a transversal hole **37** and, at the other end, an axial threaded hole (not shown in figure 1).

Moreover, the driving system includes a central body **41**, with a substantially semi-cylindrical shape, that comprises a threaded element (not shown in figure 1), substantially aligned with the axis of rotation and adapted for cooperating with the axial threaded hole of the shaft for coupling the central body **41** to shaft **7.** The central body **41** defines a recess for housing a retractable arm **43.**

Arm **43** is coupled to the central body **41** by means of fulcrum means including a transversal pin **45**, that enables it to rotate about an axis perpendicular to the axis of rotation.

A spring plunger **47** of a known type and only partially shown in figure 1, is transversally coupled to the central body **41,** parallel to pin **45**, and carries a spherical element, urged by a spring and adapted for cooperating with arm **43**, for defining two positions of arm **43,** i.e. a retracted or rest position, shown with a dashed line in the drawing, according to which arm **43** is held in a substantially axial (in particular, vertical) position in the recess of body **41** against an abutment surface **46,** and a working position in which arm **43** is substantially arranged along a transversal (horizontal) direction and urged towards the piece **49** to be checked. According to the embodiment shown in figure 1, the shifting from one position to the other is operated in a manual way: a notch **48** is formed in arm **43** for facilitating said manual operation. The free end of arm **43** defines a seat **50** for housing a mechanical driving element including a pin **54** and a compression spring **52** that urges pin **54** towards the exterior of the seat **50**. In the working position of arm **43** the pin **54** is arranged eccentric with respect to the axis of rotation.

The piece **49** to be checked, for example a brake disk for motor vehicles, has a base or support flange **51** with substantially plane faces **53, 55**, a part **57** with a substantially annular shape, surfaces **59, 61** plane and parallel to faces **53, 55** and reference holes **63**, only one shown in the drawing, and a union portion **65** - for coupling part **57** to flange **51** - with a substantially cylindrical tube shape and generating lines perpendicular to faces **53, 55** and surfaces **59, 61**.

Pin **54** is adapted for cooperating with one of the reference holes **63**, for transmitting a rotational displacement to piece **49**, as hereinafter described.

Moreover, the driving system includes driving means with a motor **71**, coupled to base plate **2**, for transmitting a rotational displacement to shaft **7**, about the axis of rotation, by means of a toothed belt **73** and a pulley **69**. Pulley **69** is coaxially coupled to shaft **7** by means of a frictional coupling achieved by means of two disks **67** that apply an axial compression force to pulley **69**. This frictional coupling has the purpose of stopping the transmission of the rotational displacement to shaft **7**, in the event that the latter undergoes a torque opposite with respect to the one transmitted by motor **71**. This opposite torque could be generated, for example, by an operator's hand accidentally contacting the piece **49** and opposing to rotations of the arm **43** and the central body **41.**

Checking means with gauging heads **75** of a known type, illustrated in an extremely schematic way in figure 1, are coupled to base plate **2**, for example by means of slides, as schematically shown in figure 1. The slides enable the gauging heads **75** to transversally translate so facilitating the loading of piece **49**, and serve to carry them onto piece **49**, once the latter is in the checking position. The heads **75** have a feeler **77** for contacting the surface to be checked of the piece **49** and transducer means, of known and herein not shown types, for emitting signals indicative of the displacements of feeler **77** with respect to a zero position, defined in a previous zero-setting phase. The processing of said signals enables to determine dimensions (for example the distance between faces **53** and **55**) and/or geometrical characteristics (for example the planarity of the surface of face **55**) of piece **49**, with respect to those of a master piece with the nominal dimensions of the piece **49** to be checked.

Figure 1 shows, in an extremely schematic way, checking means with a head belonging to a pair of heads **30**, that can be coupled to plate **21** for performing - in a known way - checkings of internal diameter dimensions of piece **49**.

The assembly of the apparatus is simple and rapid to perform. First of all the bearings **31** and **33** and spacer **36** are coupled to bush **29** and bearing **31** is locked by means of flange **40**. Then, shaft **7** is inserted in bush **29** till annular projecting part **38** abuts against bearing **33**, and a spacer **79** and thereafter the unit including pulley **69** and the two disks **67** are slipped on shaft **7**. Then, the so achieved unit is inserted through hole **3**, and bush **29** is locked to base plate **2** by means of four screws. Thereafter, the support element **9** is coupled to base plate **2**, plate **21** is fixed to support element **9**, the heads **30** (if any) are coupled to plate **21**, nosepiece **27** to support element **9** and lastly the central body **41** to shaft **7**.

Even the retooling of the apparatus is simple and rapid to perform.

In fact, when the nominal dimensions of piece **49** to be checked change, it is sufficient to unscrew the central body **41** off shaft **7** - after having brought arm **43** to the rest position according to which it is parallel to the axis of shaft **7** - unscrew the shoulder screw that couples nosepiece **27** to the support element **9**, and withdraw the former, unscrew the screws that lock plate **21**, and withdraw it. Thereafter, it is sufficient to replace plate **21**, nosepiece **27** and possibly the central body **41** with others that suit the dimensions of the new piece **49** to be checked.

The operation of the apparatus is as follows: after the apparatus has been zero-set against a master piece, piece **49** to be checked is loaded and positioned to rest on the surfaces **25, 28** of plate **21** and nosepiece **27** that position and center it in such a way that the axis of symmetry of the piece is coincident with the reference axis, and thus with the axis of rotation of the driving system.

Arm **43** is rotated till pin **54** contacts an area of the surface **61** of the piece to be checked **49**, such area being eccentric with respect to the axis of symmetry of the piece **49**. Then the gauging heads **75** with associated feelers **77** are brought into contact with the surfaces to be checked of piece **49** and motor **71** is activated. The motor **71** transmits, by means of toothed belt **73**, a rotational displacement to shaft **7**. When shaft **7** starts to rotate, it drives into rotation the central body **41** and arm **43**. Consequently, pin **54**, coupled to arm **43**, starts to slide on the surface **61** of piece **49** till it reaches the first hole **63**, enters inside (thanks to the thrust of spring **52**) and drives into rotation piece **49**. The dimensions of arm **43** and those of pin **54** - more specifically the distance separating the latter, when placed in the working position, from the axis of rotation - are obviously appropriately and specifically chosen for the piece **49** to be checked, so that pin **54** can cooperate with hole **63** or, in general, with an eccentric area with respect to the axis of symmetry of the piece **49**. Then, the heads **75** (and, if present, heads **30**) perform the dimensional checkings, as, for example, the distance checkings between surfaces of piece **49** (and/or the internal diameters), or the geometrical checkings, for example planarity, etc. If, in the course of the checking an obstacle as, for example, the hand of an operator touches arm **43** while it is moving or even piece **49**, the frictional coupling enables to uncouple shaft **7** from motor **71**, thereby stop the rotation of shaft **7** and that of arm **43**. Once the checking operations end, motor **71** is stopped, arm **43** is manually displaced to the rest position, piece **49** is removed and replaced with another piece to be checked and the above described operations are repeated.

An apparatus according to the invention is notably reliable, simple and economical.

The apparatus according to the invention, as described above, is simple to assemble, thus allows considerable savings in assembly time and costs.

Furthermore, by simply substituting component parts of the apparatus, it can be rapidly adapted to check pieces with nominal dimensions that differ from one another, so reducing the costs and the standby times when switching to check pieces of different types.

Moreover, the apparatus according to the invention provides evident advantages in terms of economy, compactness and reliability with respect to the known apparatuses (as the one shown in figure 2) that, for the purpose of setting the piece into rotation, have piece support and reference means that form a bulky external structure.

A further advantage that the apparatus according to the invention provides is that of being particularly safe for the operator. In fact, as previously described, the frictional coupling between shaft **7** and pulley **69** enables to interrupt the rotation of shaft **7** and thus of arm **43** and of piece **49**, in the event an obstacle, as, for example, the hand of an operator, were to impede the displacement of arm **43.** Hence, there is no need to equip the apparatus with guards, for preventing the operator from accidentally contacting moving parts, that would increase the cost of the apparatus.

An apparatus according to the invention can be achieved according to embodiments that differ under some aspects from what has been herein illustrated and disclosed. Some of the possible variants are hereinafter described.

For example, in the place of notch **48** there can be a knob that enables to manually displace arm **43** from the rest position to the working position and vice versa.

It is also possible to provide for a device for automatically shifting the arm **43** between the rest position and the working position, and vice versa. Embodiments of such device can have features according to known prior art (that are not shown in drawings) and include, for example, a hollow shaft **7**, a piston element upward and downward sliding therein, an actuator for automatically causing the piston sliding under the control of movable parts of the apparatus (e.g. the slides carrying the gauging heads **75**), and connecting rods coupling the piston element to the arm **43** for transforming the axial movements of the former in rotations of the latter about the axis defined by the transversal pin **45**.

The shape of the central body **41** can differ from the one shown: for example, it can be cylindrical with an open recess for housing arm **43** in the rest position.

Furthermore, when there is the specific need to check pieces **49** other than brake disks and with no reference holes **63**, pin **54** could transmit the rotational displacement to piece **49** by way of friction with an eccentric surface area of piece **49**. In this case, in order to guarantee the transmission of the displacement, the end of pin **54** that touches the surface of piece **49** could have a specific coating with a high friction coefficient, and/or there could be foreseen at least two arms **43** with associated pins **54** for cooperating with the piece **49** at two diametrically opposite areas.

Another different embodiment can include, in addition to the gauging heads **30, 75** or instead of them, checking means of different, known types, for example dimensional gauges that do not contact the surface of the piece **49** (e.g. employing pneumatic or optical detectors), sensors that monitor surface defects of the piece **49** such as the presence of flaws or cracks, and/or others.

## Claims

1. An apparatus for checking features, such as dimensional, geometrical and/or surface features, of mechanical pieces with rotational symmetry, that define an axis of symmetry, including:
• a support structure **(1,2);**
• support and reference means **(9,21,27)** for a piece **(49)** to be checked, that define a reference axis and reference surfaces **(25,28)** for positioning the piece **(49)** to be checked in such a way that the axis of symmetry and the reference axis substantially coincide;
• a driving system, including:
• a central body **(41),** coupled to the support structure **(1,2)** and adapted for performing rotational displacements about an axis of rotation;
• driving means **(71,73,69,67)** coupled to the support structure **(1,2)** and adapted for causing said rotational displacements;
• at least a mechanical driving element **(54),** coupled to the central body **(41)** and eccentric with respect to said axis of rotation, for cooperating with a surface area **(63)** of the piece **(49)**, eccentric with respect to the axis of symmetry, for transmitting rotational displacements to the piece;
the driving system being arranged so that the reference axis and the axis of rotation substantially coincide; and
• checking means **(30,75)** for cooperating with the piece to be checked;
**characterized in that** said support and reference means **(9,21,27)** include an axial hole and said driving system includes a shaft **(7)**, partially housed in said axial hole and coupled to said driving means **(71,73,67,69)** and said central body **(41)**, and an arm **(43)** coupled to said central body **(41)** by means of fulcrum means **(45)** and carrying at a free, due to the fulcrum means displaceable portion said at least a mechanical driving element **(54),** said arm **(43)** being adapted to take a rest position and a working position in which said at least a mechanical driving element **(54)** contacts said surface area **(63)** of the piece **(49)**.

2. The apparatus according to claim 1, wherein said central body **(41)** defines a recess, said arm **(43)** being adapted for being housed in said recess when it is in the rest position.

3. The apparatus according to claim 1 or claim 2 for the checking of a piece **(49)** including a central hole, the central body **(41)** being adapted for being inserted in the hole of the piece **(49)** for enabling the positioning of the piece **(49)** on the reference surfaces **(25,28)**.

4. The apparatus according to one of the preceding claims for the checking of a piece **(49)** including at least a reference hole **(63)** at said eccentric surface area, said at least a mechanical driving element including a pin **(54)** coupled to the arm **(43)** and adapted for cooperating with said at least a reference hole **(63)**.

5. The apparatus according to one of the preceding claims, wherein said driving means include a motor **(71)**, coupled to the support structure **(1,2)**, a toothed belt **(73)** and a pulley **(69)** coupled to the shaft **(7)** by means of a frictional coupling **(67)**.

6. The apparatus according to one of the preceding claims, including a spring plunger **(47)**, transversally coupled to the central body **(41)**, including a substantially spherical surface adapted to cooperate with the arm **(43)** for defining said rest and said working positions of the arm **(43)**.

7. The apparatus according to one of the preceding claims, wherein said checking means include gauging heads **(30,75)** with feelers **(77)** for contacting the piece to be checked.

## Patentansprüche

1. Vorrichtung zum Prüfen von Merkmalen, wie beispielsweise dimensionalen, geometrischen und/oder Flächenmerkmalen, von mechanischen Teilen mit Rotationssymmetrie, die eine Symmetrieachse aufweisen, mit den folgenden Bestandteilen:
· einer Lagereinheit (1, 2);
· Lager- und Referenzeinrichtungen (9, 21, 27) für ein zu prüfendes Teil (49), die eine Referenzachse und Referenzflächen (25, 28) zum Lagern des zu prüfenden Teiles (49) in einer Weise, dass die Symmetrieachse und die Referenzachse im wesentlichen zusammenfallen, besitzen;
· einem Antriebssystem mit
· einem Zentralkörper (41), der mit der Lagereinheit (1, 2) verbunden ist und Drehverschiebungen um eine Drehachse durchführen kann;
· Antriebseinrichtungen (71, 73, 69, 67), die mit der Lagereinheit (1, 2) verbunden sind und die Drehverschiebungen verursachen können;
· mindestens einem mechanischen Antriebselement (54), das mit dem Zentralkörper (41) verbunden und in bezug auf die Drehachse exzentrisch ist, um mit einem Flächenbereich (63) des Teiles (49), der zur Symmetrieachse exzentrisch ist, zusammenzuwirken und damit Drehverschiebungen auf das Teil zu übertragen;
wobei das Antriebssystem so angeordnet ist, dass die Referenzachse und die Drehachse im wesentlichen zusammenfallen; und
· Prüfeinrichtungen (30, 75) zum Zusammenwirken mit dem zu prüfenden Teil;
**dadurch gekennzeichnet, dass** die Lager- und Referenzeinrichtungen (9, 21, 27) ein Axialloch umfassen und dass das Antriebssystem eine Welle (7), die teilweise im Axialloch untergebracht und mit den Antriebseinrichtungen (71, 73, 67, 69) und dem Zentralkörper (41) verbunden ist, und einen Arm (43) aufweist, der mit Hilfe von Gelenkeinrichtungen (45) mit dem Zentralkörper (41) verbunden ist, an einem freien, infolge der Gelenkeinrichtungen verschiebbaren Abschnitt das mindestens eine mechanische Antriebselement (54) trägt und eine Ruheposition und eine Arbeitsposition, in der das mindestens eine mechanische Antriebselement (54) den Flächenbereich (63) des Teiles (49) kontaktiert, einnehmen kann.

2. Vorrichtung nach Anspruch 1, bei der der Zentralkörper (41) eine Ausnehmung aufweist und der Arm (43) in der Ausnehmung untergebracht werden kann, wenn er sich in der Ruheposition befindet.

3. Vorrichtung nach Anspruch 1 oder 2 zum Prüfen eines Teiles (49), das ein zentrales Loch besitzt, bei der der Zentralkörper (41) in das Loch des Teiles (49) eingesetzt werden kann, um eine Positionierung des Teiles (49) auf den Referenzflächen (25, 28) zu ermöglichen.

4. Vorrichtung nach einem der vorangehenden Ansprüche zum Prüfen eines Teiles (49), das mindestens ein Referenzloch (63) am exzentrischen Flächenbereich aufweist, bei der das mindestens eine mechanische Antriebselement einen Stift (54) aufweist, der mit dem Arm (43) verbunden ist und mit dem mindestens einen Referenzloch (63) zusammenwirken kann.

5. Vorrichtung nach einem der vorangehenden Ansprüche, bei der die Antriebseinrichtungen einen Motor (71), der mit der Lagereinheit (1, 2) verbunden ist, einen Zahnriemen (73) und eine Riemenscheibe (69) aufweisen, die über eine Reibkupplung (67) mit der Welle (7) verbunden ist.

6. Vorrichtung nach einem der vorangehenden Ansprüche, die einen Federkolben (47) aufweist, der in Querrichtung mit dem Zentralkörper (41) verbunden ist und eine im wesentlichen sphärische Fläche aufweist, die mit dem Arm (43) zusammenwirken kann, um die Ruhe- und Arbeitspositionen des Armes (43) zu definieren.

7. Vorrichtung nach einem der vorangehenden Ansprüche, bei der die Prüfeinrichtungen Prüfköpfe (30, 75) mit Fühlern (77) zum Kontaktieren des zu prüfenden Teiles umfassen.

## Revendications

1. Appareil destiné à vérifier des caractéristiques, telles que des caractéristiques de dimension, de géométrie et/ou de surface de pièces mécaniques à symétrie de rotation, qui définissent un axe de symétrie, comprenant :
une structure de support (1, 2) ;
des moyens de support et de référence (9, 21, 27) pour une pièce (49) à vérifier, qui définissent un axe de référence et des surfaces de référence (25, 28) pour positionner la pièce (49) à vérifier d'une telle manière que l'axe de symétrie et l'axe de référence coïncident sensiblement ;
un système de commande, comprenant :
un corps central (41), couplé à la structure de support (1, 2) et adapté pour réaliser des déplacements de rotation autour d'un axe de rotation ;
des moyens de commande (71, 73, 69, 67) couplés à la structure de support (1, 2) et adaptés pour provoquer lesdits déplacements de rotation ;
au moins un élément de commande mécanique (54), couplé au corps central (41) et excentrique par rapport audit axe de rotation, pour coopérer avec une zone de surface (63) de la pièce (49), excentrique par rapport à l'axe de symétrie, pour transmettre les déplacements de rotation à la pièce ;
le système de commande étant agencé de sorte que l'axe de référence et l'axe de rotation coïncident sensiblement ; et
des moyens de contrôle (30, 75) destinés à coopérer avec la pièce à vérifier ;
**caractérisé en ce que** lesdits moyens de support et de référence (9, 21, 27) comprennent un trou axial et ledit système de commande comprend un arbre (7), logé partiellement dans ledit trou axial et couplé auxdits moyens de commande (71, 73, 67, 69) et ledit corps central (41) et un bras (43) couplé audit corps central (41) à l'aide de moyens de pivot (45) et portant au niveau d'une partie libre déplaçable en raison des moyens de pivot, ledit au moins un élément de commande mécanique (54), ledit bras (43) étant. adapté pour prendre une position de repos et une position de travail dans laquelle ledit au moins un élément de commande mécanique (54) entre en contact avec ladite zone de surface (63) de la pièce (49).

2. Appareil selon la revendication 1, dans lequel ledit corps central (41) définit un creux, ledit bras (43) étant adapté pour être logé dans ledit creux lorsqu'il est dans la position de repos.

3. Appareil selon la revendication 1 ou la revendication 2, destiné à vérifier une pièce (49) comprenant un trou central, le corps central (41) étant adapté pour être inséré dans le trou de la pièce (49) pour permettre le positionnement de la pièce (49) sur les surfaces de référence (25, 28).

4. Appareil selon l'une quelconque des revendications précédentes destiné à vérifier une pièce (49) comprenant au moins un trou de référence (63) au niveau de ladite zone de surface excentrique, ledit au moins un élément de commande mécanique comprenant une broche (54) couplée au bras (43) et adaptée pour coopérer avec ledit au moins un trou de référence (63).

5. Appareil selon l'une quelconque des revendications précédentes, dans lequel lesdits moyens de commande comprennent un moteur (71), couplé à la structure de support (1, 2), une courroie crantée (73) et une poulie (69) couplées à l'arbre (7) au moyen d'un couplage par friction (67).

6. Appareil selon l'une quelconque des revendications précédentes, comprenant un ressort de pression (47), couplé dans le sens transversal au corps central (41), comprenant une surface sensiblement sphérique adaptée pour coopérer avec le bras (43) pour définir lesdites positions de repos et de travail du bras (43).

7. Appareil selon l'une quelconque des revendications précédentes, dans lequel lesdits moyens de contrôle comprennent des têtes de calibrage (30, 75) dotées des palpeurs (77) destinés à entrer en contact avec la pièce à vérifier.
